Europäisches Patentamt

European Patent Office

Office européen des brevets

(11) Publication number: **0 088 827**
**B1**

## (12) EUROPEAN PATENT SPECIFICATION

(45) Date of publication of patent specification: 25.03.87

(21) Application number: **82111165.5**

(22) Date of filing: **02.12.82**

(51) Int. Cl.⁴: **G 01 F 1/32**

(54) Flow velocity measuring apparatus.

(30) Priority: **15.03.82 JP 43557/82**

(43) Date of publication of application:
**21.09.83 Bulletin 83/38**

(45) Publication of the grant of the patent:
**25.03.87 Bulletin 87/13**

(84) Designated Contracting States:
**DE FR GB**

(56) References cited:
**FR-A-2 449 870**
**US-A-3 995 482**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Wada, Shunichi c/o Mitsubishi Denki K. K.**
**Himeji Works, 840 Chiyodacho Himeji-shi**
**Hyogo (JP)**

(74) Representative: **Eisenführ & Speiser**
**Martinistrasse 24**
**D-2800 Bremen 1 (DE)**

Courier Press, Leamington Spa, England.

EP 0 088 827 B1

# Description

This invention relates to a flow velocity measuring apparatus comprising a vortex-generating member disposed in the flow path of a fluid to be measured; at least one temperature-resistance converting element placed in a position being capable of sensing vortexes which are produced at the downstream side of said vortex-generating member; a bridge circuit including said temperature-resistance converting element; an amplifier circuit for amplifying the output of said bridge circuit to provide a detection signal which has a frequency corresponding to the periodical change in the temperature of said element due to the cooling action of said vortexes; and the frequency being representative of the velocity to be measured; a feedback circuit for supplying to the input of the bridge circuit a feedback signal corresponding to the amplitude of said detection signal to keep the temperature of said temperature-resistance converting element at a desired temperature; and a comparator for comparing the detection signal with a prescribed value. Such a flow velocity measuring apparatus is known from FR—A—2 449 870.

In flow velocity measuring apparatuses of such type, a temperature-resistance converting element has usually been employed as a means for detecting Karman's vortex street or Strouhl vortexes being produced on the down-stream side of a vortex-generating member used. To the converting element utilized as such member for detecting vortexes, constant current is normally supplied in order to maintain the temperature thereof at a prescribed constant value. The variation in value of resistance of the converting element caused by cooling the element by the vortexes is used as a detection signal. Since the frequency of the vortexes is in a prescribed functional relationship with respect to the flow velocity of fluid, the flow velocity of the fluid can be determined by measuring the frequency of the detection signal.

If such flow velocity measuring apparatuses have to be used for measuring flow velocities which vary within wide ranges, the evaluation of the detection signals leads to difficulties. For instance, if there are sudden changes of flow velocity the detection signal contains the vortex frequency as well as a super-imposed lower frequency which makes the evaluation difficult. Furthermore, it is necessary with such known measuring apparatus to change the sensitivity of the evaluation circuits if a certain flow velocity is exceeded.

It is an object of the present invention to provide a flow velocity measuring apparatus by which a flow velocity extending over a wide range can be accurately measured, and by which the service live of the temperature-resistance converting element can be prolonged.

In order to fulfil the object of the invention, the flow velocity measuring apparatus as stated at the outset is provided with a comparator adapted for maintaining the input of said amplifier circuit at a first value to keep said temperature-resistance converting element at a first temperature if the amplitude of said detection signal is lower than the prescribed value, whilst maintaining the amplitude at the input of said amplifier circuit at a second value to keep said temperature-resistance converting element at a second temperature being higher than said first temperature if the amplitude of said detection signal is higher than said prescribed value.

Preferred embodiments of the invention are disclosed in claims 2 to 4.

The invention will now be described in connection with the accompanying drawings.

Fig. 1(a) is a planar view showing an arrangement of a vortex-generating member and two heater wires utilized in a flow velocity measuring apparatus according to an embodiment of the present invention;

Fig. 1(b) is a perspective view of the arrangement shown in Fig. 1(a);

Fig. 2 is a diagram of an electronic circuit of the flow velocity measuring apparatus; and

Fig. 3 is a graphical representation indicating the relationship between flow velocity and sensitivity of the frequency signal in the circuit of Fig. 2.

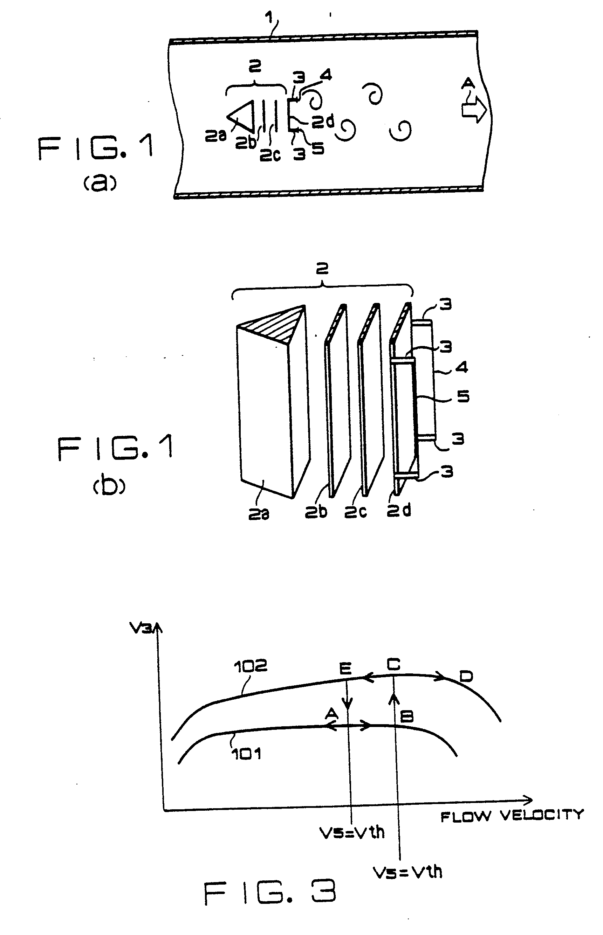

In Fig. 1(a), reference numeral 1 designates a conduit through the inside of which fluid to be measured flows from the upstream side to the downstream side in the direction indicated by arrow A. A vortex-generating member 2 consisting of a trigonal prism 2a and three plates 2b, 2c and 2d is disposed in the conduit 1. The trigonal prism 2a and the plates 2b, 2c and 2d are arranged with a prescribed spacing from one another so that the vortex-generating member 2 generates regular Karman's vortexes on the downstream side of the plate 2d. A pair of supports 3 extending towards the downstream side of flow of the fluid is fitted at both sides of the plate 2d, respectively, as shown in Fig. 1(b), and heater wires 4 and 5 are stretched between each pair of the supports, respectively. Each of the heater wires 4 and 5 is periodically cooled by means of Karman's vortex street being produced around the heater wires 4 and 5, respectively.

The vortex-generating member shown in Figs. 1(a) and 1(b) has a construction which is already well-known as a member for generating Karman's vortexes. In the present invention, any type of vortex-generating member for generating Karman's vortexes may be used, a vortex-generating member for generating Strouhl vortexes may also be applied to the apparatus of the present invention as in customary flow velocity measuring apparatuses.

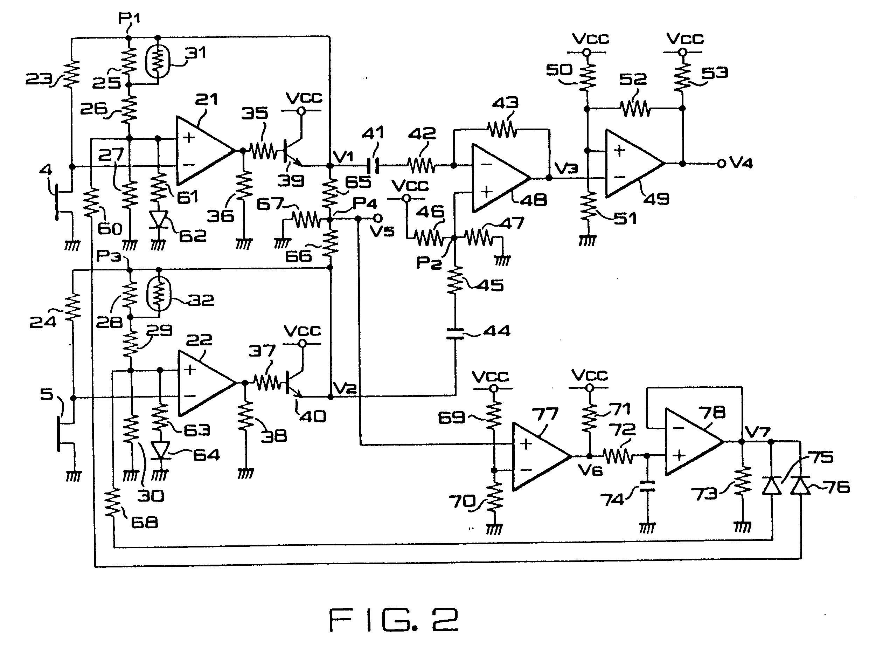

Fig. 2 is a circuit diagram of an electronic circuit for the flow velocity measuring apparatus according to the present invention. One end of each heater wires 4 and 5 is grounded, whilst the other end of the heater wire 4 is connected with an inverting input (−) of an operational amplifier 21 and through a resistor 23 to the emitter of a transistor 39. A connection point $P_1$ of this emitter

with the resistor 23 is grounded through a series circuit being composed of resistors 25 to 27, whilst a thermistor 31 is connected in parallel to the resistor 25.

A connection point of the resistor 26 with the resistor 27 is connected to a non-inverting input (+) of the operational amplifier 21, and the non-inverting input is grounded through a resistor 61 and a diode 62, and is connected to an output of an operational amplifier 78 through a series circuit consisting of a diode 76 and a resistor 60.

A bridge circuit consists of the aforesaid heater wire 4, the resistor 23, the resistors 25 to 27, and the thermistor 31. The heater wire 4 is controlled to maintain a constant temperature by means of a feedback circuit comprising the operational amplifier 21, the transistor 39 and the aforesaid bridge circuit.

An output of the operational amplifier 21 is connected to the base of the transistor 39 through a resistor 35, and is grounded through a resistor 36. A supply voltage Vcc is applied to the collector of the transistor 39, whilst an output voltage $V_1$ appears on the emitter thereof as detection output of the heater wire 4 cooled by means of Karman's vortexes.

The emitter of the transistor 39 is connected with an inverting input (−) of an operational amplifier 48 through a capacitor 41 and a resistor 42. A resistor 43 is connected between the inverting input and the output of the operational amplifier 48, and further a non-inverting input (+) of the operational amplifier 48 is connected with a connection point $P_2$. The supply voltage Vcc is applied to the connection point $P_2$ through a resistor 46, and further the connection point $P_2$ is grounded through a resistor 47.

Likewise, the other end of the heater wire 5 is connected with the inverting input (−) of an operational amplifier 22 and through a resistor 24 to the emitter of a transistor 40. A connection point $P_3$ of the above emitter with the resistor 24 is grounded through resistors 28 to 30, and a thermistor 32 is connected in parallel to the resistor 28. A connection point of the resistor 29 with the resistor 30 is connected to a non-inverting input (+) of the operational amplifier 22. This non-inverting input is grounded through a series circuit consisting of a resistor 63 and a diode 64, and is connected to the output of an operational amplifier 78 via a resistor 68 and a diode 75 in series.

The heater wire 5, the resistors 24 and 28 to 30 and the thermistor 32 constitute a bridge circuit. A feedback circuit which comprises the operational amplifier 22 and the transistor 40 operates so as to maintain the heater wire 5 at a constant temperature.

An output of the operational amplifier 22 is connected to the base electrode of the transistor 40 through a resistor 37 and is grounded through a resistor 38. Supply voltage Vcc is applied to the collector electrode of the transistor 40. Furthermore, it is arranged that a detection output voltage $V_2$ derived from the heater wire 5 cooled by Karman's vortexes appears on the emitter electrode of the transistor 40.

The emitter of the transistor 40 is also connected with a connection point $P_4$ through a resistor 66. This connection point $P_4$ is connected to the emitter of the aforesaid transistor 39 through a resistor 65 and is grounded through a resistor 67 so that a voltage $V_5$ proportional to a sum of $V_1$ and $V_2$ is generated at this connection point $P_4$.

Moreover, the emitter of the transistor 40 is also connected with the connection point $P_2$ through a capacitor 44 and a resistor 45. Thus, the output $V_2$ is applied to the non-inverting input (+) of the operational amplifier 48, whilst the output $V_1$ is applied to the inverting input (−) thereof through a capacitor 41 and a resistor 42 so that difference between the output $V_1$ and the output $V_2$ is amplified by the operational amplifier 48. Therefore, detection output $V_3$ appearing at the output of the operational amplifier 48 corresponds to the output which is derived from the Karman's vortexes.

The output of the operational amplifier 48 is connected to the inverting input (−) of a voltage comparator 49. Supply voltage Vcc is applied to the non-inverting input (+) of the voltage comparator 49 through a resistor 50, and the non-inverting input thereof is grounded through a resistor 51. A resistor 52 is connected between the non-inverting input and the output of the voltage comparator 49, and supply voltage Vcc is applied to the output thereof through a resistor 53.

The voltage comparator 49 constitutes together with the resistors 50 to 53 a waveform shaping circuit converting the output $V_3$ of the operational amplifier 48 into a pulse output $V_4$.

On the other hand, a circuit being composed of the resistors 65 to 67 derives a sum signal $V_5$ from the output voltages $V_1$ and $V_2$. The value $V_5$ is representative of the average flow velocity of the fluid to be measured and is applied to the non-inverting input (+) of a voltage comparator 77. Supply voltage Vcc is connected to the inverting input (−) of the voltage comparator 77 through a resistor 69, and the inverting input is grounded through a resistor 70.

Supply voltage Vcc is connected to the output of the voltage comparator 77 through a resistor 71, and the same output is connected with the non-inverting input (+) of the operational amplifier 78 through a resistor 72. This non-inverting input is grounded through a capacitor 74. The output of the operational amplifier 78 is grounded through a resistor 73, and is connected to the inverting input (−) of the operational amplifier 78.

The circuit being composed of the aforesaid resistors 69 to 71 and the voltage comparator 77 is used for deciding whether the value of the output $V_5$ reaches a specified value Vth or not. If the output $V_5$ is lower than the specified value, output $V_6$ of the voltage comparator 77 is at the level "L", whilst if the output $V_5$ is higher than the specified value, the output $V_6$ is at the level "H".

The resistor 72 and the capacitor 74 provide a delay circuit for the aforesaid output $V_6$ in the form of an integrating circuit. The operational amplifier 78 and the resistor 73 constitute a buffer amplifier for amplifying the delayed signal of the output $V_6$, and delivering an output $V_7$.

The resistor 60 and the diode 76 are for switching a preset temperature of the heater wire. If the output $V_7$ is at level "L", a temperature of the heater wire 4 is preset at a low temperature, whilst the temperature of the heater wire 4 is preset at a high temperature if the output $V_7$ is at level "H".

Moreover, at an intermediate level between "H" and "L", any intermediate value spreading from rather high to rather low values may be continuously adopted in respect of the temperature of the heater wire 4.

The resistor 68 and the diode 75 operate for switching the preset temperature of the heater wire 5 in a similar manner as in case of the heater wire 4.

Further, the thermistors 31 and 32 are for detecting the temperature of the fluid to be measured to correct the preset temperatures of the heater wires 4 and 5, respectively.

Next, operations of the flow velocity measuring apparatus according to the present invention will be described hereinbelow.

First, the bridge circuit consisting of the heater wire 4, resistors 23 and 25 to 27 and the thermistor 31 will be observed. If it is assumed that the voltage $V_1$ impressed across the bridge circuit as well as a resistance value of the thermistor 31 are constant, respectively, the output voltage of the bridge circuit is proportional to the resistance or temperature of the heater wire 4. Since the heater wire 4 is disposed at a position sensing either of the Karman's vortex streets produced at the downstream side of the vortex-generating member 2, the heater wire 4 is periodically cooled in response to the interval of the vortexes produced.

Thus, the output voltage of the bridge circuit varies with the same period as the interval of the vortexes in either Karman's vortex street. The output voltage of this bridge circuit is amplified by the operational amplifier 21 and the transistor 39 to produce the output voltage $V_1$. When the voltage $V_1$ is fed back to the bridge circuit, the heater wire 4 is maintained substantially at a constant temperature.

Similar operations are performed in respect of the other heater wire 5 so that the output voltage $V_2$ appears at the emitter of the transistor 40.

The output signal $V_1$ is supplied to the inverting input (−) of the operational amplifier 48 through the capacitor 41 and the resistor 42, whilst the output signal $V_2$ is supplied to the non-inverting input (+) of the operational amplifier 48 through the capacitor 44 and a network being composed of the resistors 45 to 47. The operational amplifier 48 amplifies the difference between the ac signals supplied to the two inputs (+, −) and therefore, the output signal $V_3$ is based on the difference between the signals $V_1$ and $V_2$, i.e., only on the Karman's vortex signals. In this embodiment, the signal $V_3$ is converted into the pulse signal $V_4$ having the same frequency as the signal $V_3$ by means of a converting circuit including the voltage comparator 49 in order to make processing of the signal easy in the succeeding stage.

The voltage signals $V_1$ and $V_2$ are added in an adder consisting of the resistors 65 to 67 to obtain the signal $V_5$ which is compared with the specified value Vth which has previously been set in the comparator 77. Thus, the output signal $V_6$ of the comparator 77 possesses the level "H" if the level of the signal $V_5$ is higher than the specified value Vth, and has the level "L" if the level of the signal $V_5$ is lower than the specified value. The signal $V_6$ is delayed by a delay circuit composed of the resistor 72 and the capacitor 74, and then amplified by the buffer amplifier 78. If the output signal $V_7$ of the buffer amplifier 78 is at the level "H", the diode 76 is in non-conductive state as long as the level at the non-inverting input (+) of the operational amplifier 21 is lower than the level of the signal $V_7$, and as a result, the non-inverting input of the operational amplifier 21 is maintained at a high preset level. In this situation, the output of the operational amplifier, i.e., the quantity fed back to the heater wire 4 is preset at a higher level so that the heater wire 4 is maintained at a high preset temperature. If the signal $V_7$ reaches the level "L", the level at the non-inverting input (+) of the operational amplifier 21 is preset at the lower value. The other diode 75 connected to the output of the amplifier 78 is used for presetting the voltage level at the non-inverting input (+) of the operational amplifier 22 in response to the level of the signal $V_5$, whereby the temperature of the heater wire 5 is similarly preset as that of the heater wire 4.

Fig. 3 is a graphical representation showing an example of sensitivity characteristics of the output $V_3$ with respect to the flow velocity of the fluid to be measured in which curve 101 indicates characteristics for the case that the preset temperature of the heater wires 4 and 5 are low, respectively, whilst curve 102 indicates characteristics for the case that the preset temperatures of both heater wires are high, respectively.

If the flow velocity of the fluid to be measured is low, the level of the output $V_5$ being the sum of the detection signal $V_1$ of the heater wire 4 and the detection signal $V_2$ of the heater wire 5 is lower than the specified voltage Vth, so that the heater wires 4 and 5 are automatically preset at the respective preset temperatures. In this condition, the sensitivity of the output $V_3$ exhibits such tendency that with an increase of flow velocity of the fluid to be measured, the sensitivity increases until it reaches a certain value along the curve 101, thereafter it shifts at a substantially constant ratio, and when the sensitivity reaches a certain value, it decreases. The specified voltage Vth should be preset at the same value as the level of the output $V_5$ being obtained at a flow rate immediately before turning the sensitivity of the output $V_3$ decreasing. If the specified voltage Vth has appropriately been preset, the output $V_5$ reaches the specified voltage Vth at point B being immediately before turning the sensitivity of the output $V_3$ decreasing. As a result, the output $V_6$ of the comparator 77 inverts the level "L" to the level "H" so that the input voltage level of the buffer amplifier 78 increases gradually and thus, level of the output $V_7$ gradually increases up to a prescribed value. The increase in level of the output $V_7$ rises the temperatures of the heater wires 4 and 5, whereby sensitivity of the output $V_3$ shifts from point B on the curve 101 to point C on the curve 102. The curve 102 keeps a high sensitivity level up to a region where the flow velocity is high as compared with that of the curve 101. Accordingly, even if the flow velocity increases up to around point D, the sensitivity of the output $V_3$ has a value sufficient for practical use.

Next, such a case where the flow velocity decreases gradually from the point D will be observed. If temperatures of the heater wires 4 and 5 belong to the higher preset temperatures, the output voltage $V_5$ becomes higher than that if the temperatures of both heater wires were preset at the lower preset temperatures. Under the circumstances, even though the flow rate passes through the point C and decreases further, the output $V_5$ remains at a higher value than the specified value Vth. The output $V_5$ decreases to the specified value Vth in the event that the flow velocity reaches point E being lower than the point C, and at this moment, the level of the output $V_6$ turns from the level "H" to the level "L". When the output $V_6$ turns to the level "L", the input signal of the buffer amplifier 78 decreases gradually so that when the level of the output signal $V_7$ becomes stable at the lower preset value, the temperatures of the heater wires 4 and 5 are stabilized at lower temperatures, respectively.

Although the above explanation has been made for the case where two heater wires are employed, either of the heater wires may be omitted if not so high precision is required. For instance, if the heater wire 5 is omitted in the circuit illustrated in Fig. 2, the emitter of the transistor 39 is connected to the inverting input of the voltage comparator 48 through the capacitor 41 and the resistor 42, and to the non-inverting input of the comparator 77 through the resistor 65. In this case, the preset temperature of the heater wire 4 is switched and thus, the switching of sensitivity as mentioned above is effected.

In addition, the present invention is similarly applicable if the vortex-generating member 2 is a Strouhl vortex-generating member.

Each of the heater wires utilized as a vortex-detecting element in the above-mentioned embodiment possesses such characteristics that its resistance value varies in response to the change in ambient temperature. Therefore, such heater wire is advantageous for the purpose of realizing converting elements being utilized customarily in the field of this invention such as thermistors having positive or negative temperature-resistance characteristics may also advantageously be used.

As described above, the temperature of the temperature-resistance converting element can automatically be turned over in such manner that the temperature is set at a lower level in case of low flow velocity, whilst the temperature is set at a higher level in case of high flow velocity in response to the flow velocity of the fluid to be measured in the flow velocity measuring apparatus according to the present invention.

Accordingly, the flow velocity measuring apparatus of the present invention has such advantages as that the range for measuring flow velocity becomes broader, and that, since the temperature-resistance converting element can be used at a low temperature in a region where the flow velocity is low, life of the converting element can be prolonged.

**Claims**

1. A flow velocity measuring apparatus comprising:

a vortex-generating member (2) disposed in the flow path (1) of a fluid to be measured;

at least one temperature-resistance converting element (4) placed in a position being capable of sensing vortexes which are produced at the downstream side of said vortex-generating member (2);

a bridge circuit (23, 4, 25, 31, 26, 27) including said temperature-resistance converting element (4);

an amplifier circuit (21, 35, 36, 39) for amplifying the output of said bridge circuit to provide a detection signal (V1) which has a frequency corresponding to the periodical change in the temperature of said element (4) due to the cooling action of said vortexes, and the frequency being representative of the velocity to be measured;

a feedback circuit for supplying to the input of the bridge circuit a feedback signal corresponding to the amplitude of said detection signal (V1) to keep the temperature of said temperature-resistance converting element (4) at a desired temperature; and

a comparator (69, 70, 77) for comparing the detection signal (V1) with a prescribed value (Vth); characterized in that the comparator is adapted for maintaining the input of said amplifier circuit (21, 35, 36, 39) at a first value to keep said temperature-resistance converting element (4) at a first temperature if the amplitude of said detection signal (V1) is lower than the prescribed value (Vth), whilst maintaining the amplitude at the input of said amplifier circuit (21, 35, 36, 39) at a second value to keep said temperature-resistance converting element (4) at a second temperature being higher than said first temperature if the amplitude of said detection signal (V1) is higher than said prescribed value (Vth).

2. An apparatus as claimed in claim 1, further comprising:

a second temperature-resistance element (5) placed at the downstream side of said vortex-generating member (2);

a second bridge circuit (24, 5, 28, 32, 29, 30);

a second amplifier circuit (22, 37, 38, 40) connected to the output of the second bridge circuit (24, 5, 28, 32, 29, 30) and having an associated feedback circuit which connects the output of said second amplifier circuit (22, 37, 38, 40) with the input of the second bridge circuit (24, 5, 28, 32, 29, 30);

a circuit (48) for providing an output signal (V3) corresponding to the difference between the amplitudes of the detection signals (V1, V2) of the two amplifier circuits (21, 35, 36, 39; 22, 37, 38, 40) as the flow velocity signal; the frequency of which is representative of the velocity to be measured; the comparator (69, 70, 77) comparing the sum signal (V5) of the two detection signals (V1, V2) with the prescribed value (Vth) and maintaining the inputs of both amplifier circuits (21, 35, 36, 39; 22, 37, 38, 40) at the first or the second value.

3. An apparatus as claimed in claim 1 or 2, wherein a delay circuit (72, 74) for delaying the output signal (V6) of said comparator is connected to the output of said comparator (69, 70, 77).

4. An apparatus as claimed in claim 2, wherein each of said amplifier circuits is provided with an operational amplifier (21, 22) connected to the output of the corresponding bridge circuits and a transistor (39, 40) which has its base connected with the output of said operational amplifier (21, 22) its collector connected to a supply voltage (Vcc), and its emitter connected to provide the detection signal (V1, V2).

**Patentansprüche**

1. Vorrichtung zum Messen von Strömungsgeschwindigkeiten mit einem in dem Strömungsweg (1) des zu messenden Mediums angeordneten, Wirbel erzeugenden Teil (2);

mit mindestens einem Temperatur-Widerstand-Wandlerelement (4) an einer Position, in der es den auf der Stromabwärtsseite des Wirbel erzeugenden Teils (2) erzeugten Wirbeln ausgesetzt ist;

mit einer Brückenschaltung (23, 4, 25, 31, 26, 27), die das Temperatur-Widerstand-Wandlerelement (4) enthält;

mit einer Verstärkerschaltung (21, 35, 36, 39) zum Verstärken des Ausgangssignals der Brückenschaltung zur Bereitstellung eines Meßsignals (V1), dessen Frequenz den periodischen Temperaturwechseln des Wandlerelementes (4) aufgrund der Kühlwirkung der Wirbel entspricht, und welche Frequenz für die zu messende Geschwindigkeit repräsentativ ist;

mit einem Rückkopplungskreis zum Zuführen eines der Amplitude des Meßsignals (V1) entsprechenden Rückkopplungssignals an den Eingang der Brückenschaltung, um die Temperatur des Temperatur-Widerstand-Wandlerelementes (4) auf einem gewünschten Wert zu halten; und

mit einem Komperator (69, 70, 77) zum Vergleichen des Meßsignals (V1) mit einem Referenzwert (Vth); dadurch gekennzeichnet, daß der Komperator dazu ausgebildet ist, daß sich das Eingangssignal der Verstärkerschaltung (21, 35, 36, 39) auf einen ersten Wert einstellt, um das Temperatur-Widerstand-Wandlerelement (4) auf einer ersten Temperatur zu halten, wenn die Amplitude des Meßsignals (V1) niedriger als der Referenzwert (Vth) ist,

und daß sich das Eingangssignal der Verstärkerschaltung (21, 35, 36, 39) auf einen zweiten Wert einstellt, um das Temperatur-Widerstand-Wandlerelement (4) auf einer zweiten Temperatur zu halten, die höher als die erste Temperatur ist, wenn die Amplitude des Meßsignals (V1) höher als der Referenzwert (Vth) ist.

2. Vorrichtung nach Anspruch 1, gekennzeichnet, durch ein zweites Temperatur-Wandlerelement (5), das auf der Stromabwärtsseite des Wirbel erzeugendsn Teils (2) angeordnet ist;

eine zweite Brückenschaltung (24, 5, 28, 32, 29, 30);

eine zweite Verstärkerschaltung (22, 37, 38, 40), die mit dem Ausgang der zweiten Brückenschaltung (24, 5, 28, 32, 29, 30) verbunden ist und eine zugeordnete Rückkopplungsschaltung aufweist, die den Ausgang der zweiten Verstärkerschaltung (22, 37, 38, 40) mit dem Eingang der zweiten Brückenschaltung (24, 5, 28, 32, 29, 30) koppelt;

eine Schaltung (48) zum Erzeugen eines Ausgangssignals (V3), das der Differenz zwischen den Amplituden der Meßsignale (V1, V2) der beiden Verstärkerschaltungen (21, 35, 36, 39; 22, 37, 38, 40) entspricht und das Strömungsgeschwindigkeitssignal darstellt, dessen Frequenz für die zu messende Geschwindigkeit repräsentativ ist; wobei der Komperator (69, 70, 77) das Summensignal (V5) der beiden Meßsignale (V1, V2) mit dem Referenzwert (Vth) vergleicht und die Eingangssignale der beiden Verstärkerschaltungen (21, 25, 36, 39; 22, 37, 38, 40) auf den ersten oder den zweiten Wert einstellt.

3. Vorrichtung nach Anspruch 1 oder 2, dadurch gekennzeichnet, daß eine Verzögerungsschaltung (72, 74) zum Verzögern des Ausgangssignals (V6) des Komperators mit dem Ausgang des Komperators (69, 70, 77) verbunden ist.

4. Vorrichtung nach Anspruch 2, dadurch gekennzeichnet, daß jede der Verstärkerschaltungen einen Operationsverstärker (21, 22), der an den Ausgang der zugeordneten Brückenschaltung angeschlossen ist, sowie einen Transistor (39, 40) enthält, dessen Basis mit dem Ausgang des Operationsverstärkers (21, 22) und dessen Kollektor mit der Betriebsspannung (Vcc) verbunden ist und dessen Emitter zur Lieferung des Meßsignals (V1, V2) angeschlossen ist.

**Revendications**

1. Appareil de mesure de vitesse d'écoulement comprenant un élément générateur de vortex (2) disposé dans le trajet d'écoulement (1) d'un fluide à mesurer;

au moins un élément convertisseur thermorésistant (4) placé dans une position apte à détecter des vortex qui sont produits en aval dudit élément générateur de vortex (2);

un circuit en pont (23, 4, 25, 31, 26, 27) comprenant ledit élément convertisseur thermorésistant (4);

un circuit amplificateur (21, 35, 36, 39) pour amplifier le signal de sortie dudit circuit en pont afin de délivrer un signal de détection (V1) qui a une fréquence correspondant à la variation périodique de la température dudit élément (4) due à l'action de refroidissement desdits vortex, et la fréquence étant représentative de la vitesse à mesurer;

un circuit de réaction pour envoyer à l'entrée du circuit en point un signal de réaction correspondant à l'amplitude dudit signal de détection (V1) afin de maintenir la température dudit élément convertisseur thermorésistant (4) à une température désirée; et

un comparateur (69, 70, 77) pour comparer le signal de détection (V1) avec une valeur prescrite (Vth); caractérisé en ce que le comparateur est adapté pour maintenir le signal d'entrée dudit circuit amplificateur (21, 35, 36, 39) à une première valeur afin de maintenir ledit élément convertisseur thermorésistant (4) à une première température si l'amplitude dudit signal de détection (V1) est inférieure à la valeur prescrite (Vth), tandis qu'il maintient l'amplitude à l'entrée dudit circuit amplificateur (21, 35, 36, 39) à une seconde valeur afin de maintenir ledit élément convertisseur thermorésistant (4) à une seconde température qui est plus élevée que ladite première température si l'amplitude dudit signal de détection (V1) est plus élevée que ladite valeur prescrite (Vth).

2. Appareil selon la Revendication 1, comprenant en outre:

un second élément thermorésistant (5) placé en aval dudit élément générateur de vortex (2);

un second circuit en pont (24, 5, 28, 32, 29, 30);

un second circuit amplificateur (22, 37, 38, 40) connecté à la sortie du second circuit en point (24, 5, 28, 32, 29, 30) et ayant un circuit de réaction associé qui connecte la sortie dudit second circuit amplificateur (22, 37, 38, 40) avec l'entrée du second circuit en pont (24, 5, 28, 32, 29, 30);

un circuit (48) pour délivrer un signal de sortie (V3) correspondant à la différence entre les amplitides des signaux de détection (V1, V2) des deux circuits amplificateur (21, 35, 36, 39; 22, 37, 38, 40) en tant que signal de vitesse d'écoulement dont la fréquence est représentative de la vitesse à mesurer; le comparator (69, 70, 77) comparant la somme (V5) des deux signaux de détection (V1, V2) avec la valeur prescrite (Vth) et maintenant les signaux d'entrée des deux circuits amplificateurs (21, 35, 36, 39; 22, 37, 38, 40) à la première ou à la seconde valeur.

3. Appareil selon la Revendication 1 ou 2, dans lequel un circuit de retard (72, 74) destiné à retarder le signal de sortie (V6) dudit comparateur est connecté à la sortie dudit comparateur (69, 70, 77).

4. Appareil selon la Revendication 2, dans lequel chacun desdits circuits amplificateurs est pourvu d'un amplificateur opérationnel (21, 22) connecté à la sortie des circuits en point correspondants et un transistor (39, 40) dont la base est connectée à la sortie dudit amplificateur opérationnel (21, 22), tandis que son collecteur est connecté à une tension d'alimentation (Vcc), et que son émetteur est connecté de manière à délivrer le signal de détection (V1, V2).

FIG. 1
(a)

FIG. 1
(b)

FIG. 3

1

FIG. 2

0 088 827